# EUROPEAN PATENT SPECIFICATION

(11) **EP 0 767 184 B1**
(45) Date of publication and mention of the grant of the patent: **18.08.1999**
(21) Application number: 96307295.4
(22) Date of filing: 04.10.1996
(51) Int. Cl.: C08F 10/00, C08F 4/02

(54) **Carrier for olefin polymerization catalyst, olefin polymerization catalyst and process for producing olefin polymer**
Träger für Olefinpolymerisationkatalysator, Olefinpolymerisationkatalysator und Verfahren zur Herstellung von Olefinpolymeren
Support pour catalyseur de polymérisation d'oléfines, catalyseur de polymérisation d'oléfines et procédé de préparation de polymère d'oléfines

(30) Priority: 04.10.1995 JP 25745995
(43) Date of publication of application: 09.04.1997
(73) Proprietor: Sumitomo Chemical Company, Limited, Chuo-ku Osaka 541-8550 (JP)
(72) Inventor: Kumamoto, Shin-ichi, Sodegaura-shi, Chiba (JP); Shiraishi, Hiroyuki, Ichihara-shi, Chiba (JP); Imai, Akio, Ichihara-shi, Chiba (JP)
(74) Representative: Woods, Geoffrey Corlett

(56) References cited:
- EP-A- 0 008 409
- EP-A- 0 314 131
- WO-A-94/20545
- WO-A-95/23816
- BE-A- 690 008
- FR-A- 2 331 570
- GB-A- 2 036 761
- US-A- 5 362 824
- ADVANCED MATERIALS, vol. 3, no. 4, April 1991, pages 182-190, XP000306851 REZA ARHADY: "The synthesis of polymer supports"

## Description

The present invention relates to a carrier for an olefin polymerization catalyst and a process for producing an olefin polymer with the olefin polymerization catalyst using the carrier. More particularly, the present invention relates to a carrier for an olefin polymerization catalyst, especially suitable for slurry polymerization or gas phase polymerization, having high polymerization activity and giving an olefin polymer excellent in particle properties, and a process for producing an olefin polymer with the olefin polymerization catalyst using the carrier.

Many reports, regarding processes for producing an olefin with an olefin polymerization catalyst using a transition metal compound, have been published. For example, with respect to a metallocene transition metal compound, there is disclosed a process for producing an olefin polymer with a metallocene catalyst and aluminoxane in USP 4,542,199. Further, in JP-A-01-502036(1989), a process for producing an olefin polymer with a metallocene catalyst and a boron compound is disclosed. However, the olefin polymer obtained by using soluble metallocene catalysts proposed in these publications has an irregular particle form and has a low bulk density, and when the catalysts are applied to slurry polymerization or gas phase polymerization, there are problems that bad heat transfer and lowering of productivity are induced due to formation of agglomerate polymers and adhesion of a polymer to the wall of a polymerization vessel.

To solve these problems, there is disclosed process in which a part or all of a catalyst component is supported by an inorganic oxide carrier in, for example, JP-A-61-108610(1986), JP-A-61-276805(1986), USP 4,808,561. By these processes, an olefin polymer having an excellent particle property can be obtained. However, there is a fear that the inorganic oxide remaining as an impurity in the formed polymer exerts a bad influence on physical properties of the polymer or the like, and also polymerization activity is not sufficient.

On the other hand, support of a catalyst component on an organic carrier is also proposed; JP-A-63-092621(1988) discloses support on polyethylene particles as a carrier and EP-A-563917 discloses support on a micro porous polymer carrier. However, since there can be no chemical bond between the catalyst component and the carrier in the supported catalysts disclosed in these publications, there are problems that use of a solvent is restricted in polymerization and catalyst preparation so that the catalyst component does not leak out of the carrier, and the like. Further, USP 5,362,824 and EP-A-633272 disclose a supported catalyst having a catalyst component supported on a polystyrene carrier having polar functional groups.

An object of the present invention is to provide an olefin polymerization catalyst giving an olefin polymer excellent in particle properties and having a high polymerization activity when applied to slurry polymerization and gas phase polymerization, a carrier for the polymerization catalyst, and a process for producing an olefin polymer with the polymerization catalyst. Examples of particles having good particle properties include particles containing little fine powder, particles having a narrow particle size distribution, and particles of spherical or near spherical form.

The present inventors have studied intensively to solve the above identified problems. As the result, a novel catalyst system using a specific carrier has been found to accomplish the present invention.

The present invention provides a carrier for an olefin polymerization catalyst comprising a porous acrylic polymer having a polar functional group, a solid catalyst component for an olefin polymerization comprising the carrier, an olefin polymerization catalyst , and a process for producing an olefin polymer with the catalyst.

The present invention will be described in detail below.

The carrier for an olefin polymerization catalyst of the present invention comprises a porous acrylic polymer having a polar functional group, wherein the porous acrylic polymer having a polar functional group has a micro pore volume of not less than 0.1 ml/g for micro pores having a radius of 10 to 500 nm (100 to 5,000Å), and said micro pore volume is not less than 35% of the micro pore volume for micro pores having a radius of 3.5 to 5,000 nm (35 to 50,000Å), and the polar functional group is a functional group capable of forming a chemical bond with an organoaluminum compound or an organoaluminumoxy compound.

The porous acrylic polymer includes any porous acrylic polymer, for example, a polymer of an acrylic monomer such as acrylonitrile, methyl acrylate, methyl methacrylate or methacrylonitrile or a copolymer of said monomer with a crosslink polymerizable compound having at least two unsaturated bonds. Specific examples of the crosslink polymerizable compound having at least two unsaturated bonds include divinylbenzene, trivinylbenzene, divinyltoluene, divinylketone, diallyl phthalate, diallyl maleate, N,N'-methylene bisacrylamide, ethyleneglycol dimethacrylate and polyethyleneglycol dimethacrylate. The porous acrylic polymer is preferably a copolymer of an acrylic monomer and a crosslink polymerizable compound having at least two unsaturated bonds, and especially preferably a copolymer of an acrylic monomer and divinylbenzene. More preferable acrylic polymer is a copolymer of acrylonitrile and divinylbenzene.

The content of the crosslink polymerizable compound unit in the copolymer is preferably not more than 60% by weight, more preferably 0.1 to 50% by weight, particularly preferably 1 to 40% by weight.

The porous acrylic polymers described above can be prepared according to known methods, for example, JP-B-06-055792(1994).

As the polar functional group that the carrier for an olefin polymerization catalyst comprising a porous acrylic polymer of the present invention has, there can be included any polar functional group capable of forming a chemical bond with an organoaluminum compound or organoaluminumoxy compound. Examples of the functional group include primary amino, secondary amino, imino, amide, imide, hydrazide, amidino, hydroxy, hydroperoxy, carboxyl, formyl, methoxycarbonyl, carbamoyl, sulfone (SO₂), sulfine (SO), sulfeno (S), thiol, thiocarboxyl, thioformyl, pyrrolyl, imidazolyl, piperidyl, indazolyl and carbazolyl. Primary amino, secondary amino, imino, amide, imide, hydroxy, formyl, carboxyl, sulfone and thiol are preferred and primary amino and secondary amino are more preferred.

The porous acrylic polymer having a polar functional group used for a carrier can be prepared by introducing the polar functional group into a porous acrylic polymer. However, when the porous acrylic polymer has the polar functional group, the polymer may be used as it is as a carrier.

The introduction of one or more kinds of polar functional group into the acrylic polymer is carried out by conducting a proper chemical treatment on the acrylic polymer. As the chemical treatment, there can be adopted any method which can introduce one or more kinds of polar functional groups into the acrylic polymer. For example, a reaction of an acrylic polymer with a polyalkylenepolyamine such as ethylenediamine, propanediamine, diethylenetriamine, tetraethylenepentamine or dipropylenetriamine, is illustrated. Preparation of the porous acrylic polymer having a polar functional group is disclosed in, for example, JP-A-63-251402.

As a specific example of the above-described reaction, there is listed, for example, a method in which an acrylic polymer (e.g. polyacrylonitrile particles) is treated at a temperature of not less than 100°C, preferably of from 120 to 150°C in an aqueous slurry composed of the polymer and a mixed solution of ethylenediamine and water.

In the present invention, the amount of the polar functional group is not especially restricted, preferably from 0.01 to 50 mmol, more preferably from 0.1 to 20 mmol per gram of the carrier.

In the present invention, the carrier has a micro pore volume of not less than 0.1 ml/g, preferably not less than 0.3 ml/g, for micro pores having a radius of 10 to 500 nm (100 to 5,000Å), and said micro pore volume is not less than 35%, preferably not less than 40%, of the micro pore volume for micro pores having a radius of 3.5 to 5,000 nm (35 to 50,000Å).

In the present invention, the average particle size of the carrier is preferably from 5 µm to 1,000 µm, more preferably from 10 µm to 500 µm.

The solid catalyst component for olefin polymerization of the present invention comprises:
(A) a transition metal compound;
(B) an organoaluminum compound and/or an organoaluminumoxy compound; and
(C) the above-described carrier for an olefin polymerization catalyst comprising a porous acrylic polymer having a polar functional group.

As the transition metal compound (A) used in the solid catalyst component for olefin polymerization of the present invention, any transition metal compound having an olefin polymerization activity may be used, for example, a metallocene transition metal compound is listed.

Usually, the metallocene transition metal compound is represented by the general formula MLₐ Xₙ₋ₐ.

In the above-identified formula, M is a transition metal atom in the Fourth Group or Lanthanide series of the Periodic Table of Elements (1993, IUPAC).

The specific examples of M include, for example, titanium atom, zirconium atom and hafnium atom as the transition metal in the Fourth Group in the Periodic Table, and samarium as the transition metal in Lanthanide series. A titanium atom, zirconium atom or hafnium atom is preferred.

L in the above-described general formula is a group having a cyclopentadienyl skeleton or a group containing a hetero atom and a group having at least one cyclopentadienyl skeleton. Multiple L may be crosslinked with each other. The group having a cyclopentadienyl skeleton includes for example a cyclopentadienyl group, a substituted cyclopentadienyl group and a polycyclic group having a cyclopentadienyl skeleton. In the case of the substituted cyclopentadienyl group, the examples of the substituent include a hydrocarbon group having 1 to 20 carbon atoms, a halogenated hydrocarbon group having 1 to 20 carbon atoms and a silyl group having 1 to 60 carbon atoms, and in the case of the polycyclic group having a cyclopentadienyl skeleton, the examples of the substituent include indenyl group and fluorenyl group. Moreover, when the substituent is a group having a hetero atom, the examples of the hetero atom include nitrogen atom, oxygen atom, phosphorus atom and sulfur atom.

The specific examples of the substituted cyclopentadienyl group include, for example, methylcyclopentadienyl, ethylcyclopentadienyl, n-propylcyclopentadienyl, n-butylcyclopentadienyl, isopropylcyclopentadienyl, isobutylcyclopentadienyl, sec-butylcyclopentadienyl, tert-butylcyclopentadienyl, 1,2-dimethylcyclopentadienyl, 1,3-dimethylcyclopentadienyl, trimethylcyclopentadienyl;, 1,2,3-1,2,4-trimethylcyclopentadienyl, tetramethylcyclopentadienyl and pentamethylcyclopentadienyl. The specific examples of the polycyclic group having a cyclopentadienyl skeleton include indenyl, 4,5,6,7-tetrahydroindenyl and fluorenyl. The examples of the group containing a hetero atom include methyl amino, tert-butylamino, benzylamino, methoxy, tert-butoxy, phenoxy, pyrrolyl and thiomethoxy. The group having a cyclopentadienyl skeleton and the hetero atom may be crosslinked or the groups each having a cyclopentadienyl skeleton may be crcsslinked with each other via an alkylene group such as ethylene or propylene, a substituted alkylene group such as dimethylmethylene or diphenylmethylene, silylene or a substituted silylene group such as dimethylsilylene, diphenylsilylene or methylsilylsilylene.

X in the above-described general formula is a halogen atom or a hydrocarbon group having 1 to 20 carbon atoms, a is an integer satisfying 0 < a ≦ n, and n indicates the valence of the transition metal atom (M).

The specific examples of X in the metallocene transition metal compound include, for example, fluorine, chlorine, bromine and iodine as the halogen atom, and methyl, ethyl, n-propyl, isopropyl, n-butyl and benzyl as the hydrocarbon group having 1 to 20 carbon atoms.

The specific examples of the compound in which M is zirconium among the metallocene transition metal compounds represented by the above-described formula MLₐXₙ₋ₐ include, for example, bis(cyclopentadienyl)zirconium dichloride, bis(cyclopentadienyl)zirconium dibromide, bis(cyclopentadienyl)zirconiumdimethyl, bis(methylcyclopentadienyl)zirconium dichloride, bis(methylcyclopentadienyl)zirconium dibromide, bis(methylcyclopentadienyl)zirconiumdimethyl, bis(pentamethylcyclopentadienyl)zirconium dichloride, bis(pentamethylcyclopentadienyl)zirconium dibromide, bis(pentamethylcyclopentadienyl)zirconiumdimethyl, bis(indenyl)zirconium dichloride, bis(indenyl)zirconium dibromide, bis(indenyl)zirconiumdimethyl, bis(4,5,6,7-tetrahydroindenyl)zirconium dichloride, bis(4,5,6,7-tetrahydroindenyl)zirconium dibromide, bis(4,5,6,7-tetrahydroindenyl)zirconiumdimethyl, bis(fluorenyl)zirconium dichloride, bis(fluorenyl)zirconium dibromide, bis(fluorenyl)zirconiumdimethyl, ethylenebis(indenyl)zirconium dichloride, ethylenebis(indenyl)zirconium dibromide, ethylenebis(indenyl)zirconiumdimethyl, ethylenebis(4,5,6,7-tetrahydroindenyl)zirconium dichloride, isopropylidene(cyclopentadienyl-fluorenyl) zirconium dichloride, dimethylsilylenebis(cyclopentadienyl)zirconium dichloride, dimethylsilylenebis(indenyl)zirconium dichloride, dimethylsilylenebis(4,5,6,7-tetrahydroindenyl)zirconium dichloride, dimethylsilylene(cyclopentadienyl-fluorenyl)zirconium dichloride, diphenylsilylenebis(indenyl)zirconium dichloride, cyclopentadienyldimethylaminozirconium dichloride, cyclopentadienylphenoxyzirconium dichloride, and dimethyl(tert-butylamino) (tetramethylcyclopentadienyl) silanezirconium dichloride.

Further, there can be illustrated likewise compounds represented by changing zirconium to titanium or hafnium in the above-described examples of zirconium compounds.

In the solid catalyst component for olefin polymerization of the present invention, (B): an organoaluminum compound (B1) and/or an organoaluminumoxy compound (B2) is used.

As the organoaluminum compound (B1), known ones may be used. Preferably, an organoaluminum compound represented by the general formula R¹_{b}AlY_{3-b} (wherein R¹ is a hydrocarbon group having 1 to 8 carbon atoms, Y is a hydrogen atom and/or halogen atom, and b is an integer of from 0 to 3) can be exemplified.

The specific examples of the organoaluminum compound represented by the above-described formula R¹_{b}AlY_{3-b} include, for example, a trialkylaluminum such as trimethylaluminum, triethylaluminum, tri-n-propylaluminum, triisobutylaluminum or tri-n-hexylaluminum; a dialkylaluminum chloride such as dimethylaluminum chloride, diethylaluminum chloride, di-n-propylaluminum chloride, diisobutylaluminum chloride or di-n-hexylaluminum chloride; an alkylaluminum dichloride such as methylaluminum dichloride, ethylaluminum dichloride, n-propylaluminum dichloride, isobutylaluminum dichloride or n-hexylaluminum dichloride; a dialkylaluminum hydride such as dimethylaluminum hydride, diethylaluminum hydride, di-n-propylaluminum hydride, diisobutylaluminum hydride or di-n-hexylaluminum hydride. Among them, trimethylaluminum, triethylaluminum and triisobutylaluminum are preferred.

As the organoaluminumoxy compound (B2), known organoaluminumoxy compounds may be used. Preferably, a cyclic aluminoxane having a structure represented by the general formula {-Al(R²)-O-}_{c} and a linear aluminoxane having a structure represented by the general formula R³(-Al(R³)-O-)_{d}AlR³₂ (wherein R² and R³ independently represent hydrocarbon groups having 1 to 8 carbon atoms, which may be the same or different as each other, and each c and d indicates an integer of one or more) can be exemplified.

The specific examples of R² and R³ include, for example, an alkyl group (e.g. methyl, ethyl, n-propyl, isopropyl, n-butyl, isobutyl, n-pentyl or neopentyl). Methyl or isobutyl is preferable, and methyl is the most preferable. Each c and d preferably indicates an integer of from 1 to 40, more preferably from 3 to 20.

The aluminoxane may be prepared by various methods. The method is not restricted, and the aluminoxane may be prepared according to known methods. For example, a solution of at least one trialkylaluminum (for example, trimethylaluminum) dissolved with an appropriate organic solvent (for example, benzene or an aliphatic hydrocarbon) is contacted with water to prepare the aluminoxane. As another method, at least one trialkylaluminum (for example, trimethylaluminum) can be contacted with a metal salt containing water of crystallization (for example, hydrated copper sulfate) to prepare the aluminoxane.

The solid catalyst component for olefin polymerization of the present invention can be obtained by contacting a porous acrylic polymer having a polar functional group(C) as a carrier for an olefin polymerization catalyst with a transition metal compound (A),and an organoaluminum compound and/or an organoaluminumoxy compound (B). The order of the contact and their combination are not restricted; however, it is preferable to, after contacting (C) With (B), contact (A) therewith, or to, after contacting (A) with (B), contact (C) therewith. The contacting is preferably conducted in an inert gas atmosphere, and the contact temperature is preferably -80 to 200°C, more preferably 0 to 100°C. The contact time is preferably from 1 minute to 36 hours, more preferably from 10 minutes to 24 hours. The solvent used for the preparation of the solid catalyst component is preferably an aliphatic solvent or an aromatic solvent which is inert to a transition metal compound, organoaluminum compound and organoaluminumoxy compound. Specific examples include n-butane, n-hexane, n-heptane, benzene, toluene, dichloromethane and chloroform. After the contact of (A) and/or (B) with (C), the supernatant may be filtered off and the residual solid may be washed with an inert solvent, or the solvent may be distilled off in vacuum or under inert gas flow, but these operations are not necessarily carried out.

The amount of the transition metal compound (A) contained in the resulting solid catalyst component is preferably from 0.001 mmol to 10 mmol, more preferably from 0.01 mmol to 5 mmol in terms of the amount of transition metal atom (M) per 1 g of the solid catalyst component in dry state. The atomic ratio of the aluminum atom in (B) to the transition metal atom (M) in (A) (Al/M) in the solid catalyst component is preferably not less than 3, more preferably from 5 to 1,000, yet more preferably from 10 to 500. The solid catalyst component obtained may be used for polymerization in flowable dry or half dry particle form, or may be used for polymerization in suspended form in an inert solvent.

Though the solid catalyst component can be used as a polymerization catalyst without any treatment, it is preferable to use the solid catalyst component in combination with an organoaluminum compound and/or an organoaluminumoxy compound. In this case, as the organoaluminum compound and the organoaluminumoxy compound, the same compounds as exemplified for (B) are listed, and the preferable compound is a trialkylaluminum (e.g. trimethylaluminum, triethylaluminum, triisobutylaluminum). The ratio of the Al atom in the added compound to the transition metal atom (M) in the solid catalyst component (Al/M) is usually from 0.01 to 10,000, preferably from 0.1 to 1,000.

In the present invention, as the monomer used for polymerization, any olefin, diolefin having 2 to 20 carbon atoms or the like can be used, also at least two monomers can be simultaneously used to conduct copolymerization. The specific examples of them include ethylene, propylene, butene-1, pentene-1, hexene-1, heptene-1, octene-1, nonene-1, decene-1, hexadecene-1, eicosene-1, 4-methylpentene-1,5-methyl-2-pentene-1, vinylcyclohexane, styrene and norbornene, but the present invention is not restricted to these compounds. As the preferred concrete example of the monomers constituting the copolymer, ethylene and propylene, ethylene and butene-1, ethylene and hexene-1, and propylene and butene-1 are listed, but the present invention is not restricted to these compounds.

The polymerization method is not restricted, and any of a liquid phase polymerization method and a gas phase polymerization method can be adopted. As the solvent used for the liquid phase polymerization, there are listed, for example, an aliphatic hydrocarbon such as butane, pentane, heptane or octane, an aromatic hydrocarbon such as benzene or toluene, and a halogenated hydrocarbon such as methylene chloride, and an olefin itself to be polymerized can be used as a solvent. The polymerization can be conducted by any method of a batchwise method, semi-batchwise method and continuous method, further the polymerization may be conducted in more than one stage each having different reaction condition. The polymerization temperature is preferably from -50°C to 200°C, more preferably 0°C to 100°C. The polymerization pressure is preferably from normal pressure to 100 kg/cm² more preferably from normal pressure to 50 kg/cm². The polymerization time is properly determined considering the kind of the desired olefin polymer and the reaction apparatus, and may be usually from 1 minute to 20 hours. Further, in the present invention, a chain transfer agent such as hydrogen or the like may be added in polymerization, to regulate the molecular weight of the olefin polymer.

### EXAMPLE

The present invention will be explained in detail in the following examples and comparative examples, but it is not limited thereto. Properties of an olefin component in the examples were measured by the following methods.
(1) The pore volume and pore distribution of a carrier were measured by a mercury penetration method using PORELYZER 9310 manufactured by Micro Meritics Ltd.
(2) The average particle size of a carrier was determined by observation using an optical microscope.
(3) The content of α-olefin was determined using a calibration curve made by characteristic absorptions of ethylene and α-olefin, by using an infrared spectrophotometer (1600 series manufactured by Perkin Elmer Ltd.), and was expressed in terms of short chain branch (SCB) number per 1000C.
(4) Melt flow rate (MFR) was measured at 190°C according to JIS K6760.

### Example 1

### (1) Preparation of organic polymer carrier

A 2 liter cylindrical flask equipped with a stirrer, a reflux condenser and a thermometer was charged with 60 g of acrylonitrile-divinylbenzene copolymer (the content of divinylbenzene unit was 10% by weight, the micro pore volume for micro pores having their radius of 10 to 500 nm (100 to 5,000Å) was 0.62 ml/g, the micro pore volume for micro pores having their radius of 3.5 to 5,000 nm (35 to 50,000Å) was 0.71 ml/g, and the average particle size was 50 µm) and 206 g of diethylenetriamine and 36 g of distilled water were added. The reaction was carried out for 4 hours at 130°C to 140°C, the supernatant liquid was filtered off, and the obtained solid was washed twice with 1 liter of distilled water. A flowable solid (158 g) was obtained by vacuum drying.

The resulting carrier for an olefin polymerization catalyst had a pore volume in the pore radius of from 10 to 500 nm (100 to 5,000Å) of 0.46 ml/g , a pore volume in the pore radius of from 3.5 to 5,000 nm (35 to 50,000Å) of 0.48 ml/g and an average particle size of 45 µm.

### (2) Preparation of solid catalyst component

An inner atmosphere of a 200 ml flask equipped with a stirrer, a dropping funnel and a thermometer was replaced with nitrogen, then 8.05 g of the carrier prepared in (1) was charged to the flask. Toluene (100 ml) was added to obtain a slurry, after cooling to 4°C, 20.4 ml of a toluene solution of methylaluminoxane (1.97 mmol/ml, manufactured by Toso Akzo Ltd.) was added dropwise to evolve a gas. After stirring for 30 minutes at 4°C and 2 hours at 25°C, the supernatant was removed by filtration, then washing with 100 ml of toluene was repeated three times. Then 73.1 ml of a toluene solution of ethylenebisindenylzirconium dichloride (2.2 µmol/ml) was added, and the resulting mixture was stirred at room temperature for one hour. The supernatant liquid was removed by filtration, and the resulting solid was washed twice with 100 ml of toluene and once with 100 ml of hexane, and a flowable solid catalyst component was obtained by vacuum drying.

Thus obtained solid catalyst component contained 9.86 µmol of zirconium and 2.74 mmol of aluminum per 1 g of the solid catalyst component.

### (3) Polymerization

An autoclave having an inner volume of 400 ml equipped with a stirrer was evacuated, charged with 96 g of butane and 4 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 8.9 mg of the solid catalyst component prepared in (2) was added. Polymerization was carried out at 70°C with feeding of ethylene so that the total pressure was kept constant. Sixty minutes after, the polymerization was terminated by adding 3 ml of ethanol. An olefin copolymer was obtained in an amount of 20.6 g, and there was recognized no adhesion of the polymer to the inner wall of the autoclave. The polymerization activity per transition metal was 2.3 × 10⁸ (g/mol).

The SCB and MFR of the resulting olefin polymer were 19.6 and less than 0.1 g/10 minutes, respectively.

### Example 2

### (1) Preparation of carrier for olefin polymerization catalyst

A 2 liter cylindrical flask equipped with a stirrer, a reflux condenser and a thermometer was charged with 71.1 g of acrylonitrile-divinylbenzene copolymer (the content of divinylbenzene unit was 10% by weight, the micro pore volume for micro pores having their radius of 10 to 500 nm (100 to 5,000Å) was 0.62 ml/g, the micro pore volume for micro pores having their radius of 3.5 to 5,000 nm (35 to 50,000Å) was 0.71 ml/g, and the average particle size was 50 µm) and 356 g of ethylenediamine and 78.9 g of distilled water were added. The reaction was carried out for 7.5 hours at 130°C, the supernatant liquid was removed off by filtration, and the obtained solid was washed twice with 1 liter of distilled water. A flowable solid (36.3 g) was obtained by vacuum drying.

The resulting carrier for an olefin polymerization catalyst had a pore volume in the pore radius of from 10 to 500 nm (100 to 5,000Å) of 1.31 ml/g , a pore volume in the pore radius of from 3.5 to 5,000 nm (35 to 50,000Å) of 1.56 ml/g and an average particle size of 40 µm.

### (2) Preparation of solid catalyst component

An inner atmosphere of a 100 ml flask equipped with a stirrer, a dropping funnel and a thermometer was replaced with nitrogen, then 0.921 g of the carrier prepared in (1) was charged to the flask. Toluene (40 ml) was added to obtain a slurry, after cooling to 4°C, 4.67 ml of a toluene solution of methylaluminoxane (1.97 mmol/ml, manufactured by Toso Akzo Ltd.) was added dropwise to evolve a gas. After stirring for 30 minutes at 4°C and 2.5 hours at 25°C, the supernatant was removed by filtration, then washing with 50 ml of toluene was repeated twice. Then 13.8 ml of a toluene solution of ethylenebisindenylzirconium dichloride (2.2 µmol/ml) was added, and the resulting mixture was stirred at room temperature for one hour. The supernatant liquid was removed by filtration, and the resulting solid was washed twice with 50 ml of toluene and once with 50 ml of hexane, and a flowable solid catalyst component was obtained by vacuum drying.

Thus obtained solid catalyst component contained 15.3 µmol of zirconium and 5.23 mmol of aluminum per 1 g of the solid catalyst component.

### (3) Polymerization

An autoclave having an inner volume of 400 ml equipped with a stirrer was evacuated, charged with 96 g of butane and 4 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 10.8 mg of the solid catalyst component prepared in (2) was added. Polymerization was carried out at 70°C with feeding of ethylene so that the total pressure was kept constant. After 30 minutes, the polymerization was terminated by adding 3 ml of ethanol. An olefin copolymer was obtained in an amount of 17.5 g, and there was recognized no adhesion of the polymer to the inner wall of the autoclave. The polymerization activity per transition metal was 2.1 × 10⁸ (g/mol).

The SCB and MFR of the resulting olefin polymer were 20.9 and less than 0.1 g/10 minutes, respectively.

### Example 3

### (1) Preparation of carrier for olefin polymerization catalyst

A 2 liter cylindrical flask equipped with a stirrer, a reflux condenser and a thermometer was charged with 71.1 g of acrylonitrile-divinylbenzene copolymer (the content of divinylbenzene unit was 10% by weight, the micro pore volume for micro pores having their radius of 10 to 500 nm (100 to 5,000Å) was 0.62 ml/g, the micro pore volume for micro pores having their radius of 3.5 to 5,000 nm (35 to 50,000Å) was 0.71 ml/g, and the average particle size was 50 µm) and 447 g of propanediamine and 78.9 g of distilled water were added. The reaction was carried out for 7.5 hours at 130°C, the supernatant liquid was removed off by filtration, and the obtained solid was washed twice with 1 liter of distilled water. A flowable solid (42 g) was obtained by vacuum drying.

The resulting carrier for an olefin polymerization catalyst had a micro pore volume for micro pores having their radius of from 10 to 500 nm (100 to 5,000Å) of 0.54 ml/g, a micro pore volume for micro pores having their radius of from 3.5 to 5,000 nm (35 to 50,000Å) of 0.64 ml/g and an average particle size of 45 µm.

### (2) Preparation of solid catalyst component

An inner atmosphere of a 100 ml flask equipped with a stirrer, a dropping funnel and a thermometer was replaced with nitrogen, then 0.846 g of the carrier prepared in (1) was charged to the flask. Toluene (50 ml) was added to obtain a slurry, after cooled to 4°C, 6.44 ml of a toluene solution of methylaluminoxane (1.97 mmol/ml, manufactured by Toso Akzo Ltd.) was added dropwise to evolve a gas. After stirring for 30 minutes at 4°C and 2.5 hours at 25°C, the supernatant was removed by filtration, then washing with 100 ml of toluene was repeated three times. Then 19.0 ml of a toluene solution of ethylenebisindenylzirconium dichloride (2.0 µmol/ml) was added, and the resulting mixture was stirred at room temperature for one hour. The supernatant liquid was removed by filtration, and the resulting solid was washed twice with 50 ml of toluene and once with 50 ml of hexane, and a flowable solid catalyst component was obtained by vacuum drying.

Thus obtained solid catalyst component contained 23.0 µmol of zirconium and 6.60 mmol of aluminum per 1 g of the solid catalyst component.

### (3) Polymerization

An autoclave having an inner volume of 400 ml equipped with a stirrer was evacuated, charged with 95 g of butane and 5 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 8.4 mg of the solid catalyst component prepared in (2) was added. Polymerization was carried out at 70°C with feeding of ethylene so that the total pressure was kept constant. twenty minutes after, the polymerization was terminated by adding 3 ml of ethanol. An olefin copolymer was obtained in an amount of 21.1 g, and there was recognized no adhesion of the polymer to the inner wall of the autoclave. The polymerization activity per transition metal was 3.3 × 10⁸ (g/mol).

The SCB and MFR of the resulting olefin polymer were 22.8 and 0.316 g/10 minutes, respectively.

### Example 4

### (1) Preparation of solid catalyst component

An inner atmosphere of a 100 ml flask equipped with a stirrer, a dropping funnel and a thermometer was replaced with nitrogen, then 2.10 g of the carrier prepared in Example 1(1) was charged to the flask. Toluene (40 ml) was added to obtain a slurry, 12.6 ml of a heptane solution of triisobutylaluminum (1.0 mmol/ml) was added dropwise to evolve a gas. After stirring for 2 hours at room temperature, the supernatant was removed by filtration, then the residual solid was washed with 40 ml of toluene. Toluene (30 ml) was added to make a slurry again, 13.3 ml of a toluene solution of methylaluminoxane (1.97 mmol/ml, manufactured by Toso Akzo Ltd.) was added dropwise to evolve a gas. After stirring for 30 minutes at room temperature and 2 hours at 80°C, the supernatant was removed by filtration, then washing with 40 ml of toluene was repeated three times. Toluene (40 ml) was added to make a slurry again, 4.80 ml of a toluene solution of dicyclopentadienylzirconium dichloride (0.035 µmol/ml) was added, and stirring at room temperature was conducted for one hour. The supernatant liquid was removed by filtration, and washing was conducted three times with 40 ml of toluene and once with 40 ml of hexane, and a flowable solid catalyst component was obtained by vacuum drying.

Thus obtained solid catalyst component contained 32.9 µmol/g of zirconium and 6.08 mmol/g of aluminum.

### (3) Polymerization

An autoclave having an inner volume of 400 ml equipped with a stirrer was evacuated, charged with 85 g of n-butane and 15 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 60.0 mg of the solid catalyst component prepared in (1) was added. Polymerization was carried out at 70°C with feeding of ethylene so that the total pressure was kept constant. Sixty minutes after, the polymerization was terminated by adding 3 ml of ethanol. An olefin copolymer was obtained in an amount of 21.9 g, and there was recognized no adhesion of the polymer to the inner wall of the autoclave. The polymerization activity per transition metal was 1.1 × 10⁷ (g/mol).

The SCB and MFR of the resulting olefin polymer were 22.6 and 0.63 g/10 minutes, respectively.

### Comparative Example 1

### (1) Preparation of solid catalyst component

An inner atmosphere of a 100 ml flask equipped with a stirrer, a dropping funnel and a thermometer was replaced with nitrogen, then 1.21 g of acrylonitrile-divinylbenzene copolymer (the content of divinylbenzene unit was 10% by weight, the micro pore volume for micro pores having their radius of 10 to 500 nm (100 to 5,000Å) was 0.62 ml/g, the micro pore volume for micro pores having their radius of 3.5 to 5,000 nm (35 to 50,000Å) was 0.71 ml/g, and the average particle size was 50 µm). Toluene (25 ml) was added to make a slurry again, 3.07 ml of a toluene solution of methylaluminoxane (1.97 mmol/ml, manufactured by Toso Akzo Ltd.) was added dropwise. After stirring for 30 minutes at 4°C and 2.5 hours at 25°C, the supernatant was removed by filtration, then washing with 50 ml of toluene was repeated twice. Toluene (40 ml) was added to make a slurry again, 12.1 ml of a toluene solution of ethylenebisindenylzirconium dichloride (2.0 µmol/ml) was added, and stirring at room temperature was conducted for one hour. The supernatant liquid was removed by filtration, and washing was conducted twice with 50 ml of toluene and once with 50 ml of hexane, and a flowable solid catalyst component was obtained by vacuum drying.

Thus obtained solid catalyst component contained 7.67 µmol/g of zirconium and 1.18 mmol/g of aluminum. These contents were smaller as compared with the case in which the carrier of acrylic organic polymer having a polar functional group was used.

### (2) Polymerization

An autoclave having an inner volume of 400 ml equipped with a stirrer was evacuated, charged with 95 g of n-butane and 5 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 11.7 mg of the solid catalyst component prepared in (1) was added. Polymerization was carried out at 70°C with feeding of ethylene so that the total pressure was kept constant. Sixty minutes after, the polymerization was terminated by adding 3 ml of ethanol. An olefin copolymer was obtained in an amount of less than 0.2 g, and the polymerization activity per transition metal was far lower than the case in which the carrier of an acrylic organic polymer having a polar functional group was used.

### Comparative Example 2

### (1) Preparation of carrier for olefin polymerization catalyst

After an inner atmosphere of a 1 liter flask equipped with a stirrer, a dropping funnel and a thermometer was replaced with nitrogen, 21.4 g of styrene-divinylbenzene copolymer (the content of divinylbenzene unit was 30% by weight, micro pore volume for micro pores having their radius of 10 to 500 nm (100 to 5,000Å) was 1.08 ml/g, the micro pore volume for micro pores having their radius of 3.5 to 5,000 nm (35 to 50,000Å) was 1.36 ml/g, and the average particle size was 40 µm) was charged to the flask.

Dichloromethane (400 ml) was added to make a slurry, and to the slurry was added 48.8 g of aluminum trichloride at 3°C with stirring. Subsequently, 22 ml of acetyl chloride was gradually added dropwise at 3°C, after completion of the addition, reaction was carried out for 3 hours at 25°C, then 4 hours at 35°C. After cooled to 3°C, an aqueous solution of 100 ml of 37 % hydrochloric acid and 300 ml of distilled water was gradually added dropwise with vigorous stirring. The liquid portion was removed by filtration, the resulting residue was washed successively with 200 ml of distilled water, 200 ml of ethanol, 200 ml of acetone and 200 ml of hexane, and vacuum drying was conducted to obtain 23.5 g of a white flowable solid.

An inner atmosphere of 200 ml flask equipped with a stirrer, a reflux condenser and a thermometer was replaced with nitrogen, and 10.5 g of the acylated polystyrene obtained as described above was charged into the flask. Methanol (40 ml) was added to make a slurry, to this was added gradually a solution 5.3 g of sodium borohydride in 50 ml of a 5% aqueous sodium hydroxide solution at 3°C with stirring, to evolve a gas. After completion of the addition, reaction was conducted for 12 hours at 25°C, and 20 ml of acetone was added gradually at 3 °C. The liquid portion was removed by filtration, the resulting residue was washed successively with 100 ml of distilled water, 100 ml of methanol and 100 ml of hexane, and vacuum drying was conducted to obtain 9.63 g of a white flowable solid.

The resulted carrier for an olefin polymerization catalyst had a micro pore volume for micro pores having their radius of 10 to 500 nm (100 to 5,000Å) of 1.21 ml/g, a micro pore volume for micro pores having their radius of 3.5 to 5,000 nm (35 to 50,000Å) of 1.36 ml/g, and an average particle size of 40 µm.

### (2) Preparation of solid catalyst component

An inner atmosphere of a 100 ml flask equipped with a stirrer, a dropping funnel and a thermometer was replaced with nitrogen, then 0.992 g of the carrier prepared in (1) was charged to the flask. Toluene (50 ml) was added to obtain a slurry, after cooled to 4°C, 2.52 ml of a toluene solution of methylaluminoxane (1.97 mmol/ml, manufactured by Toso Akzo Ltd.) was added dropwise to evolve a gas. After stirring for 30 minutes at 4°C and 2.5 hours at 25°C, the supernatant was removed by filtration, then washing with 50 ml of toluene was repeated twice. Then, 40 ml of toluene was added to make a slurry again, and to the slurry was added 6.61 ml of a toluene solution of ethylenebisindenylzirconium dichloride (2.0 µ mol/ml) was added, and the reaction mixture was stirred at room temperature for one hour. The supernatant liquid was removed by filtration, and washing was conducted twice with 50 ml of toluene and once with 50 ml of hexane, and a flowable solid catalyst component was obtained by vacuum drying.

Thus obtained solid catalyst component contained 9.87 µmol of zirconium and 2.50 mmol of aluminum per 1 g of the solid catalyst component.

### (3) Polymerization

An autoclave having an inner volume of 400 ml equipped with a stirrer was evacuated, charged with 95 g of butane and 5 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 9.4 mg of the solid catalyst component prepared in (1) was added. Polymerization was carried out at 70°C with feeding of ethylene so that the total pressure was kept constant. Sixty minutes after, the polymerization was terminated by adding 3 ml of ethanol. An olefin copolymer was obtained in an amount of 10.9 and there was recognized no adhesion of the polymer to the inner wall of the autoclave. The polymerization activity per transition metal was 1.2× 10⁸ (g/mol).

The SCB and MFR of the resulting olefin polymer were 19.4 and 0.127g/10 minutes, respectively.

### Comparative Example 3

### (1) Preparation of solid catalyst component

An inner atmosphere of a 200 ml flask equipped with a stirrer, a dropping funnel and a thermometer was replaced with nitrogen, then was charged with 9.78 g of silica (ES70X, manufactured by Cross Field Ltd.) which has been calcined for 5 hours at 300°C under nitrogen flow. Toluene (120 ml) was added to obtain a slurry, 34.8 ml of a toluene solution of methylaluminoxane (manufactured by Toso Akzo Ltd., 1.97 mmol/ml) was gradually added dropwise to evolve a gas. After stirring for 30 minutes at 4°C, and further for 5 hours at 80°C, the supernatant was removed by filtration, then the residual solid was washed twice with 100 ml of toluene.

An inner atmosphere of 100 ml flask equipped with a stirrer, a dropping funnel and a thermometer was replaced with nitrogen, then was charged with 1.10 g of the resulting methyaluminoxane treated silica. Toluene (50 ml) was added to make a slurry, 7.49 ml of a toluene solution of ethylenebisindenylzirconium dichloride (2.0 µmol/ml) was added, and the resulting mixture was stirred at room temperature for one hour. The supernatant was removed by filtration, the residue was washed twice with 50 ml of toluene and once with 50 ml of hexane, and a flowable solid catalyst component was obtained by vacuum drying.

Thus obtained solid catalyst component contained 13.6 µmol/g of zirconium and 3.41 mmol/g of aluminum.

### (2) Polymerization

An autoclave having an inner volume of 400 ml equipped with a stirrer was evacuated, charged with 95 g of butane and 5 g of butene-1 and the resulting mixture was heated to 70°C. After this heating, ethylene was added to give a partial pressure of 6 kg/cm², and after the system was stabilized, 1 ml of a heptane solution of triisobutylaluminum (1 mmol/ml) was added, subsequently 60.0 mg of the solid catalyst component prepared in (1) was added. Polymerization was carried out at 70°C with feeding of ethylene so that the total pressure was kept constant. Sixty minutes after, the polymerization was terminated by adding 3 ml of ethanol. An olefin copolymer was obtained in an amount of 22.6 g, and there was recognized no adhesion of the polymer to the inner wall of the autoclave. The polymerization activity per transition metal was 1.2× 10⁸ (g/mol).

The SCB and MFR of the resulting olefin polymer were 20.3 and 0.119 g/10 minutes, respectively.

As described in detail, there can be obtained an olefin polymer having excellent particle properties with high polymerization activity by using the olefin polymerization catalyst of the present invention.

## Claims

1. A carrier for an olefin polymerization catalyst comprising a porous acrylic polymer having a polar functional group, wherein the porous acrylic polymer having a polar functional group has a micro pore volume of not less than 0.1 ml/g for micro pores having a radius of 10 to 500 nm (100 to 5,000Å), and said micro pore volume is not less than 35% of the micro pore volume for micro pores having a radius of 3.5 to 5,000 nm (35 to 50,000Å), and the polar functional group is a functional group capable of forming a chemical bond with an organoaluminum compound or an organoaluminumoxy compound.

2. A carrier according to claim 1, wherein the average particle size of the porous acrylic polymer is from 5 µm to 1,000 µm.

3. A carrier according to claim 1 or 2, wherein the porous acrylic polymer is a copolymer of an acrylic monomer and a crosslink polymerizable compound having at least two unsaturated bonds.

4. A carrier according to any one of the preceding claims, wherein the porous acrylic polymer is a copolymer of acrylonitrile and divinylbenzene.

5. A carrier according to any one of the preceding claims, wherein the polar functional group is at least one member selected from primary amino group, secondary amino group, imino group, amide group, imide group, hydroxy group, formyl group, carboxyl group, sulfone group and thiol group.

6. A carrier according to any one of the preceding claims, wherein the polar functional group is a primary amino group and/or a secondary amino group.

7. A solid catalyst component for olefin polymerization which comprises:
(A) a transition metal compound;
(B) an organoaluminum compound and/or an organoaluminumoxy compound; and
(C) a carrier according to any one of the preceding claims.

8. A solid catalyst component for olefin polymerization obtainable by contacting (C) a carrier according to any one of claims 1 to 6 with (A) a transition metal compound and (B) an organoaluminum compound and/or an organoaluminumoxy compound.

9. A solid catalyst component according to claim 7 or 8, wherein the transition metal compound is a metallocene transition metal compound.

10. An olefin polymerization catalyst comprising a solid catalyst component for olefin polymerization according to any one of claims 7 to 9, and further organoaluminum compound and/or organoaluminumoxy compound.

11. A process for producing an olefin polymer which comprises contacting an olefin with a solid catalyst component for olefin polymerization according to any one of claims 7 to 9 or an olefin polymerization catalyst according to claim 10.

## Patentansprüche

1. Träger für einen Olefinpolymerisationskatalysator, umfassend ein poröses Acrylpolymer mit einem polaren funktionellen Rest, wobei das poröse Acrylpolymer mit einem polaren funktionellen Rest ein Mikroporenvolumen von mindestens 0,1 ml/g für Mikroporen mit einem Radius von 10 bis 500 nm (100 bis 5000 Å) aufweist und dieses Mikroporenvolumen mindestens 35% des Mikroporenvolumens der Mikroporen mit einem Radius von 3,5 bis 5000 nm (35 bis 50000 Å) ausmacht und der polare funktionelle Rest ein funktioneller Rest ist, der eine chemische Bindung mit einer Organoaluminiumverbindung oder einer Organoaluminiumoxyverbindung bilden kann.

2. Träger gemäß Anspruch 1, wobei die durchschnittliche Partikelgröße des porösen Acrylpolymers 5 µm bis 1000 µm beträgt.

3. Träger gemäß Anspruch 1 oder 2, wobei das poröse Acrylpolymer ein Copolymer eines Acrylmonomers und einer vernetzbaren, polymerisierbaren Verbindung mit mindestens zwei ungesättigten Bindungen ist.

4. Träger nach einem der vorstehenden Ansprüche, wobei das poröse Acrylpolymer ein Copolymer aus Acrylnitril und Divinylbenzol ist.

5. Träger nach einem der vorstehenden Ansprüche, wobei der polare funktionelle Rest mindestens ein Rest ausgewählt aus einem primären Aminrest, einem sekundären Aminrest, einem Iminrest, einem Amidrest, einem Imidrest, einer Hydroxygruppe, einer Formylgruppe, einer Carboxylgruppe, einem Sulfonrest und einer Thiolgruppe ist.

6. Träger nach einem der vorstehenden Ansprüche, wobei der polare funktionelle Rest ein primärer Aminrest und/oder ein sekundärer Aminrest ist.

7. Fester Katalysatorbestandteil für die Olefinpolymerisation, umfassend:
(A) eine Übergangsmetallverbindung;
(B) eine Organoaluminiumverbindung und/oder eine Organoaluminiumoxyverbindung; und
(C) einen Träger nach einem der vorstehenden Ansprüche.

8. Fester Katalysatorbestandteil für die Olefinpolymerisation, erhältlich durch Inkontaktbringen von (C) einem Träger gemäß einem der vorstehenden Ansprüche 1 bis 6 mit (A) einer Übergangsmetallverbindung und (B) einer Organoaluminiumverbindung und/oder einer Organoaluminiumoxyverbindung.

9. Fester Katalysatorbestandteil gemäß Anspruch 7 oder 8, wobei die Übergangsmetallverbindung eine Metallocenübergangsmetallverbindung ist.

10. Olefinpolymerisationskatalysator umfassend einen festen Katalysatorbestandteil für die Olefinpolymerisation nach einem der Ansprüche 7 bis 9 und weiterhin umfassend Organoaluminiumverbindung und/oder Organoaluminiumoxyverbindung.

11. Verfahren zur Herstellung eines Olefinpolymers, umfassend Inkontaktbringen eines Olefins mit einem festen Katalysatorbestandteil für die Olefinpolymerisation nach einem der Ansprüche 7 bis 9 oder einem Olefinpolymerisationskatalysator nach Anspruch 10.

## Revendications

1. Support pour un catalyseur de polymérisation d'oléfines comprenant un polymère acrylique poreux présentant un groupe fonctionnel polaire, dans lequel le polymère acrylique poreux présentant un groupe fonctionnel polaire présente un volume de micropores d'au moins 0,1 ml/g pour des micropores ayant un rayon de 10 à 500 (100 à 5 000 Å), et ledit volume de micropores est au moins 35% du volume de micropores pour des micropores ayant un rayon de 3,5 à 5 000 nm (35 à 50 000Å) et le groupe fonctionnel polaire est un groupe fonctionnel capable de former une liaison chimique avec un composé organoaluminium ou un composé organoaluminiumoxy.

2. Support selon la revendication 1, dans lequel la taille moyenne de particules du polymère acrylique poreux est comprise entre 5 µm et 1 000 µm.

3. Support selon la revendication 1 ou 2, dans lequel le polymère acrylique poreux est un copolymère d'un monomère acrylique et d'un composé polymérisable par réticulation présentant au moins deux liaisons insaturées.

4. Support selon l'une quelconque des revendications précédentes, dans lequel le polymère acrylique poreux est un copolymère d'acrylonitrile et de divinylbenzène.

5. Support selon l'une quelconque des revendications précédentes, dans lequel le groupe fonctionnel polaire est au moins un élément choisi parmi un groupe amino primaire, un groupe amino secondaire, un groupe imino, un groupe amide, un groupe imide, un groupe hydroxy, un groupe formyle, un groupe carboxyle, un groupe sulfone et un groupe thiol.

6. Support selon l'une quelconque des revendications précédentes, dans lequel le groupe fonctionnel polaire est un groupe amino primaire et/ou un groupe amino secondaire.

7. Constituant de catalyseur solide pour la polymérisation d'oléfines qui comprend :
(A) un composé de métal de transition;
(B) un composé organoaluminium et/ou un composé organoaluminiumoxy; et
(C) un support selon l'une quelconque des revendications précédentes.

8. Constituant de catalyseur solide pour la polymérisation d'oléfines pouvant être obtenu par mise en contact (C) d'un support selon l'une quelconque des revendications 1 à 6 avec (A) un composé de métal de transition et (B) un composé organoaluminium et/ou un composé organoaluminiumoxy.

9. Constituant de catalyseur solide selon la revendication 7 ou 8, dans lequel le composé de métal de transition est un composé de métal de transition de métallocène.

10. Catalyseur de polymérisation d'oléfines comprenant un constituant de catalyseur solide pour la polymérisation d'oléfines selon l'une quelconque des revendications 7 à 9 et en outre un composé organoaluminium et/ou un composé organoaluminiumoxy.

11. Procédé pour la production d'un polymère d'oléfine qui comprend la mise en contact d'une oléfine avec un constituant de catalyseur solide pour la polymérisation d'oléfines selon l'une quelconque des revendications 7 à 9 ou un catalyseur de polymérisation d'oléfines selon la revendication 10.
